# EUROPEAN PATENT SPECIFICATION

(11) **EP 4 244 511 B1**
(45) Date of publication and mention of the grant of the patent: **07.08.2024**
(21) Application number: 21801511.3
(22) Date of filing: 27.10.2021
(51) Int. Cl.: F16K 41/04, F16K 27/02, F16K 31/122, F16K 31/42, F16K 37/00

(54) **VALVE SYSTEM**
VENTILSYSTEM
SYSTÈME DE SOUPAPE

(30) Priority: 13.11.2020 IN 202021049688
(43) Date of publication of application: 20.09.2023
(73) Proprietor: ASCO SAS, 28110 Lucé (FR)
(72) Inventor: SOBRINO, Cecilio, 37270 Montlouis sur Loire (FR); KAPADANE, Amol Bhaurao, Pune (IN); VANDAMME, Richard, 28300 Lèves (FR)
(74) Representative: Cabinet Nony
(86) International application number: PCT/EP2021/079817
(87) International publication number: WO 2022/101013

(56) References cited:
- US-A1- 2010 090 151
- US-A1- 2015 198 186
- US-A1- 2015 377 383
- US-A1- 2019 195 389

## Description

The present invention is related to a valve system, and more particularly but not exclusively to a pressure operated fluid valve system.

### Background

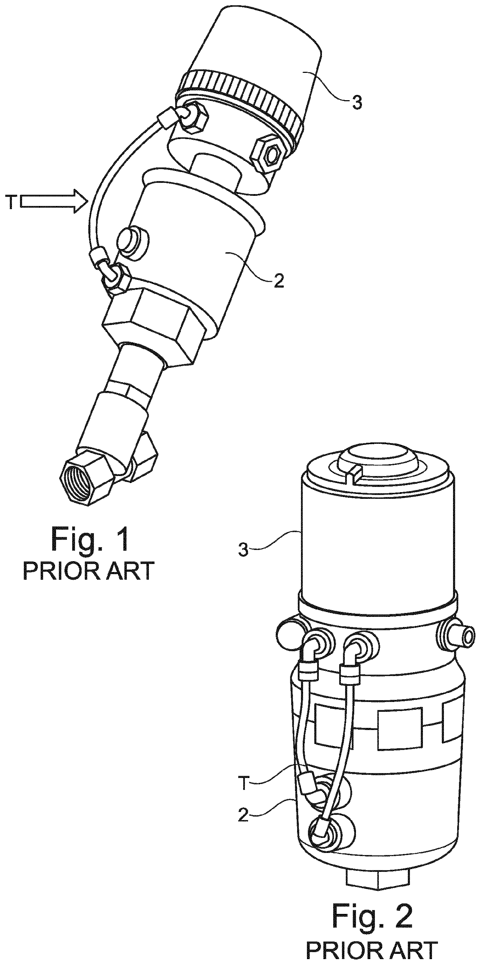

In currently existing valve systems as illustrated in Figs. 1 and 2, in order to route air/fluid from a valve positioner 3 to a valve actuator 2, external tubing T such as plastic or stainless-steel tube are commonly used. However, such external tubing with plastic or stainless-steel pipes is cumbersome and may cause spillage issues.

CN101749481 discloses a structure for connecting an electrical valve positioner to an actuator. The actuator comprises an actuator body, a bracket on which the positioner is arranged, and a linkage rod. The bracket comprises an air path with an air inlet and an air outlet, the air inlet of the air path being connected to the air outlet of the positioner, and the air outlet of the air path being connected to a lower chamber of the actuator body.

WO2014/011721 discloses an actuator assembly coupling an actuator casing to a fluid valve. The actuator assembly employs a diaphragm coupled to an actuator stem to define an upper pressure chamber and a lower pressure chamber and further includes a yoke in which a passageway is formed. The passageway is fluidly coupled to both and/or either of the upper and lower pressure chambers. The yoke has a first end coupled to the actuator casing and a second end coupled to a bonnet of a fluid valve. A positioner is coupled to or mounted on the yoke. The passageway defines a first fluid path that couples the positioner or the control fluid to the upper pressure chamber, and a second fluid path that couples the positioner or the control fluid to the lower pressure chamber.

US 9222490 discloses an exhaust valve for use in conjunction with a valve positioner for controlling the flow of a pneumatic or hydraulic fluid to a valve actuator.

In the above documents, the system comprises parts external to the valve positioner and valve actuator for guiding the fluid. This renders the system relatively complex and cumbersome.

Various valve actuators with dedicated internal tubing are also known.

US 2017292626 discloses a valve device comprising a valve body, and a piston integrally formed with a stem. The valve device comprises an actuator having a casing coupled to the valve body. The piston is formed with an operating fluid introduction passage extending to an operating fluid introduction chamber of the actuator.

US 2007215077 discloses an electromechanical valve actuator comprising an electromagnet assembly and an armature assembly. The armature assembly includes a hollow armature stem defining a stem passage between an upper end and a lower end. A fluid feed system is connected to the upper end of the armature stem.

US 2017234438 discloses a direct touch-type metal diaphragm valve comprising an actuator for moving vertically a stem of the valve and fine-adjustment means for changing the stem vertical range. The actuator comprises a drive shaft having a lower end portion which is screwed to an upper end portion of the stem. The drive shaft is provided with an axial channel and radial channels.

US7000895 discloses a valve comprising a pressure balancing piston having a pressure passage.

US2010/0090151 and US2015/0198186 disclose known valve systems of the prior art.

There exists a need to further improve existing valve systems comprising a valve actuator and a valve positioner for controlling the valve actuator based on the position of a valve stem in order to achieve proportional control of the valve.

### Summary of the invention

Exemplary embodiments of the present invention relate to a valve system comprising:
- a valve including a valve stem;
- a valve actuator for controlling opening and closing of the valve and comprising a piston coupled to the valve stem and defining a first chamber of the valve actuator,
- a valve positioner for controlling the valve actuator and adjusting the position of the valve stem, and
- a coupling system comprising:
   - a coupling element for connecting the valve positioner to the valve actuator, the coupling element comprising a first channel in fluid communication with a fluid outlet of the valve positioner;
   - a stem extension that moves with the valve stem and comprises a second channel in fluid communication with the first channel and the first chamber of the valve actuator.

The present invention allows to obtain a valve system with internal means for fluidly connecting the valve positioner to the valve actuator. By reducing the number of components and avoiding the use of external tubing, the invention allows to achieve a compact design.

In the present invention, the term "valve positioner" should be understood to include both a device for commanding in a proportional manner the opening of a valve, and a device configured for commanding the valve in either an open or a close position. In the latter case, the valve positioner is also called "switching box".

The terms "upper" or "top", and "lower" or "bottom" refer to the relative position along a longitudinal axis of the system oriented vertically, with the valve positioner lying above the valve actuator.

The valve is preferably a pressure-operated, in particular proportional valve. The valve is preferably a normally closed or normally open valve.

The first chamber may be a lower chamber situated below the piston. The piston may comprise a second chamber opposite the first chamber, for example being an upper chamber situated above the piston. The first chamber may be a pressure chamber.

The valve stem may extend through the piston, for example into the second chamber.

The piston may comprise a central bore.

The central bore of the piston may comprise a central portion of circular cross-section and at least one eccentric portion adjacent to the central portion, the eccentric portion(s) forming longitudinal path(s) between the valve stem and the piston, the second channel being in fluid communication with the first chamber through the eccentric portion(s). The central portion preferably has a diameter corresponding to that of the portion of the valve stem received therein, with a small annular clearance in order to avoid friction during the movement of the valve stem. The central bore preferably comprises an even number of eccentric portions and the latter are preferably symmetrical about the longitudinal axis of the valve system.

The valve stem may comprise on an external surface thereof a shoulder. The valve system may comprise a washer arranged between the piston and the valve stem, in particular between a bottom face of the piston and the shoulder of the valve stem. The washer may comprise radially oriented notches. At least some of the notches may face the eccentric portions in the longitudinal direction of the valve system.

The stem extension may be at least partially received in the first channel of the coupling element at a first end and be configured to receive at least partially the valve stem in the second channel at a second end opposite the first. The end portion adjacent the second end may be situated axially between a shoulder on an internal surface of the stem extension defining the second channel and a surface of the stem extension in contact with the piston. The second channel may have a cross section, observed perpendicular to a longitudinal axis of the valve system that is enlarged at the end portion. The cross section of the second channel may become larger when approaching a face of the stem extension in contact with the piston.

The internal surface of the stem extension may define at said end portion adjacent the face in contact with the piston two successive shoulders. The first shoulder may be situated further from the piston than the second shoulder. The second channel may have a diameter smaller at the first shoulder than at the second shoulder. The second shoulder may be configured to be pressed against a sealing element, for example an O-ring for sealing of the interface between the piston and the stem extension.

The valve positioner may comprise a positioner stem. The positioner stem may be received at least partially in the stem element, in particularly at the first end of the stem element.

In a variant, the stem element extends through the coupling element into the positioner.

In a variant, the valve positioner comprises a positioner stem and the positioner stem is extended by the stem extension. The positioner stem may form a single piece with the stem extension.

The valve stem may comprise a third channel in fluid communication with the second channel of the stem extension. The third channel may comprise at least a fluid outlet that opens into the first chamber of the valve actuator.

In another variant, the stem extension extends through the piston into the first chamber of the valve actuator.

The stem extension may be at least partially received in the first channel of the coupling element at a first end and be configured to be received at least partially in the valve stem at a second end opposite the first.

The second channel may have a cross section, observed perpendicularly to a longitudinal axis of the valve system, that is reduced when approaching said second end.

The second channel may comprise at least a fluid outlet that opens into the first chamber of the valve actuator. This facilitates the machining of the valve stem and the stem extension. It also avoids the drilling of eccentric portions in the piston.

The valve may comprise a plunger connected to the valve stem for opening and closing the valve. The plunger may be received in a valve body.

The system may comprise a stuffing box connecting the valve body to the valve actuator. The stuffing box may comprise a stuffing box body housing a spring and chevrons packings pushed by a stuffing box spring.

Exemplary embodiments of the present invention also relate to a valve system comprising:
- a valve including a valve stem;
- a valve actuator for controlling opening and closing of the valve and comprising a piston coupled to the valve stem and defining a first chamber of the valve actuator,
- a valve positioner for controlling the valve actuator and adjusting the position of the valve stem, and
- a coupling system comprising:
   - a coupling element for connecting the valve positioner to the valve actuator, the coupling element comprising a first channel in fluid communication with a fluid outlet of the valve positioner;
   - a stem extension that moves with the valve stem and at least partially received in the channel of the coupling element, the stem extension comprising a second channel in fluid communication with the first channel and the first chamber of the valve actuator,
wherein the valve stem extends through the piston into a second chamber of the valve actuator opposite the first chamber with respect to the piston, the stem extension being at least partially received in the first channel of the coupling element at a first end and being configured to receive at least partially the valve stem in the second channel at a second end opposite the first, the piston comprising a central bore having a central portion and at least one eccentric portion adjacent to the central portion, the eccentric portion(s) forming a longitudinal path(s) between the valve stem and the piston, the second channel being in fluid communication with the first chamber through the eccentric portion(s).

The valve system may comprise a washer arranged between the piston and a shoulder of the valve stem. The washer may comprise radially oriented notches. At least some of the notches may face the eccentric portions in the longitudinal direction of the valve system.

The valve positioner may comprise a positioner stem. The positioner stem may be received at least partially in the stem extension, in particularly at the first end.

In a variant, the stem extension extends through the coupling element, for example into the valve positioner.

Exemplary embodiments of the present invention also relate to a valve assembly comprising:
- a valve including a valve stem;
- a valve actuator for controlling opening and closing of the valve and comprising a piston coupled to the valve stem and defining a first chamber of the valve actuator,
- a valve positioner for controlling the valve actuator and adjusting the position of the valve stem, and
- a coupling system comprising:
   - a coupling element for connecting the valve positioner to the valve actuator, the coupling element comprising a first channel in fluid communication with a fluid outlet of the valve positioner;
   - a stem extension that moves with the valve stem and at least partially received in the channel of the coupling element, the stem extension comprising a second channel in fluid communication with the first channel and the first chamber of the valve actuator,
wherein the valve stem extends through the piston into a second chamber of the valve actuator situated on a side of the piston opposite the first chamber, the valve positioner comprising a positioner stem, the positioner stem being extended by the stem extension and forming, for example, a single piece with the stem extension, the valve stem comprising a third channel in fluid communication with the second channel of the stem extension, the third channel comprising a fluid outlet that opens into the first chamber of the valve actuator.

The coupling element may comprise a bearing for supporting the positioner stem.

Exemplary embodiments of the present invention also relate to a valve assembly comprising:
- a valve including a valve stem;
- a valve actuator for controlling opening and closing of the valve and comprising a piston coupled to the valve stem and defining a first chamber of the valve actuator,
- a valve positioner for controlling the valve actuator and adjusting the position of the valve stem, and
- a coupling system comprising:
   - a coupling element for connecting the valve positioner to the valve actuator, the coupling element comprising a first channel in fluid communication with a fluid outlet of the valve positioner;
   - a stem extension that moves with the valve stem and at least partially received in the channel of the coupling element, the stem extension comprising a second channel in fluid communication with the first channel and the first chamber of the valve actuator,
wherein the stem extension extends through the piston into the first chamber and the second channel comprising at least a fluid outlet that opens into the first chamber of the valve actuator, the stem extension being at least partially received in the first channel of the coupling element at one end portion and being configured to be received at least partially in the valve stem at another end portion.

Exemplary embodiments of the present invention also relate to a method for assembling a valve positioner to a valve actuator using a coupling system in order to obtain a valve system according to the invention, the method comprising connecting the stem extension and the coupling element and connecting the stem extension and the valve stem.

Embodiments of the invention will now be described in some further detail with reference to and as illustrated in the accompanying figures. These embodiments are illustrative only, and are not meant to be restrictive of the scope of the invention as defined by the appended claims.

### Detailed description of the illustrated figures

- Fig.1 and 2 illustrate valve systems of prior art;
- Fig.3 is a schematic view in axial cross section of a valve assembly according to the present invention;
- Fig.4 is an enlarged view of detail III of Fig.3;
- Fig.5 shows the coupling element of Fig.3;
- Fig.6 is a cross-section of the stem extension of Fig.3;
- Fig.7 shows in isolation the piston of Fig.3;
- Fig.8 shows in isolation the washer of Fig.3;
- Fig.9 illustrates another embodiment of the coupling system of the invention
- Fig. 10 is an enlarged view of detail IX of Fig.9;
- Fig.11 to 13 illustrate another embodiment of the coupling system of the invention;
- Fig. 14 illustrates another embodiment of the coupling system of the invention;
- Fig. 15 illustrates another embodiment of the coupling system of the invention.

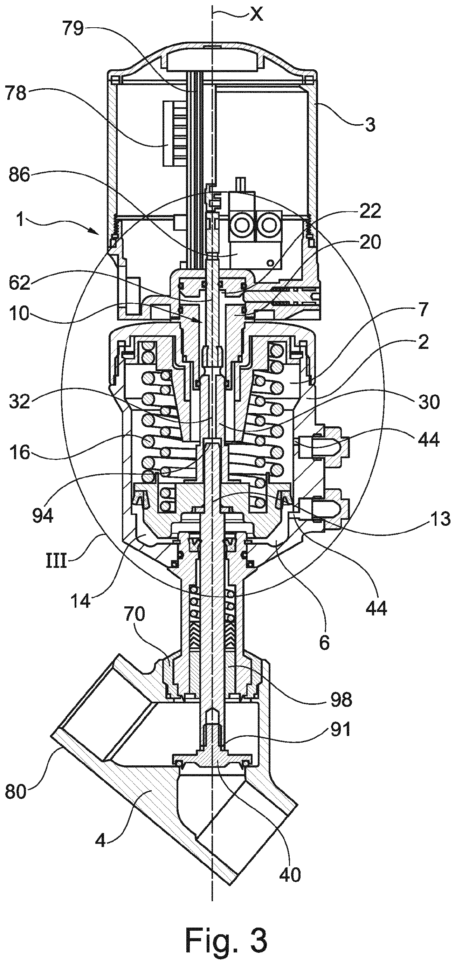

A valve system of the invention, as illustrated in Fig.3, comprises a valve system 1 comprising a valve 4, a valve actuator 2 and a valve positioner 3. The valve 4 comprises a valve body 80 housing a plunger 40 fixed to a reciprocating valve stem 13 at one end 91. The opposite end 94 of the valve stem 13 extends into the valve actuator 2.

A stuffing box 70 connects the valve body 80 to the valve actuator 2. The stuffing box 30 comprises a central opening 98 equipped with seals and inside which the valve stem 13 can slide.

The valve assembly further comprises a coupling system 10. The latter comprises a coupling element 20 and a stem extension 30. The coupling element 20 connects the valve positioner 3 to the valve actuator 2.

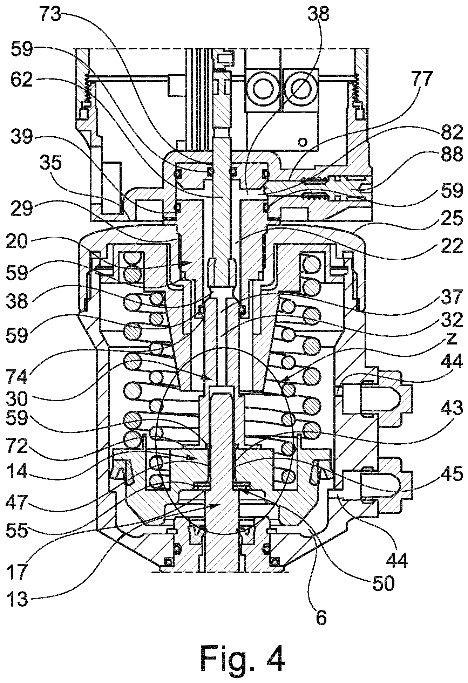

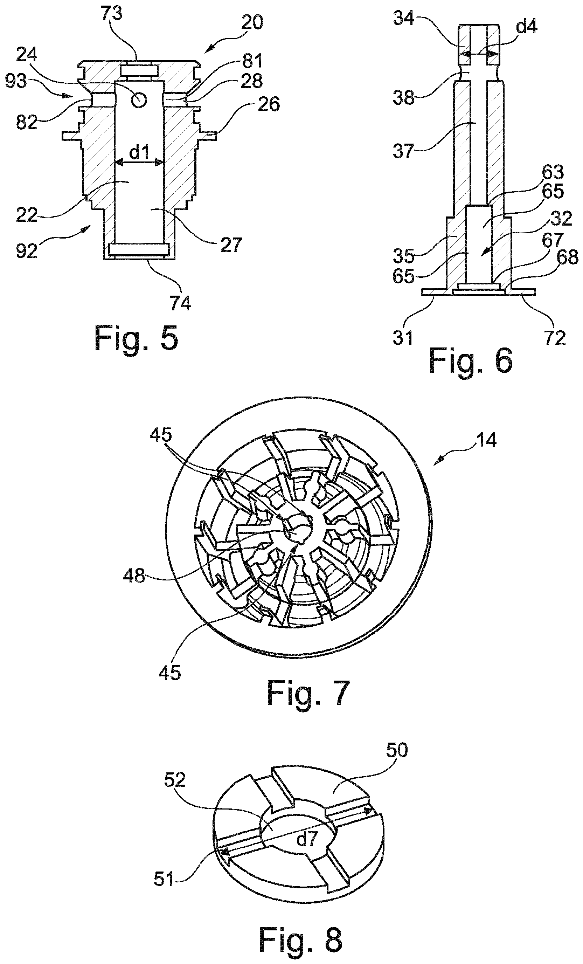

As illustrated in Fig.4 and 5, the coupling element 20 has a tubular shape. The coupling element 20 comprises an upper positioner-side portion 93 and a lower actuator-side portion 92. An annular flange 26 is situated between the positioner-side portion 93 and an actuator-side portion 92.

The positioner-side portion 93 is received in a recess 39 on a bottom face 35 of the valve positioner 3. The actuator-side portion 92 is received in an annular opening 29 defined by a top face 25 of the valve actuator 2. The annular protrusion 26 is arranged between the bottom face 35 of the valve positioner 3 and the top face 25 of the valve actuator 2.

As illustrated in Fig.5, the coupling element 20 comprises a first channel 22, which comprises a first central passage 27 oriented along the longitudinal axis X of the valve system and four radially oriented first inlet passages 28 that open into the first central passage 27 by their ends 81 that are radially internal. The first central passage 27 comprises two opposite openings 73 and 74, being respectively a positioner-side opening 73 and an actuator-side opening 74. The first inlet passages 28 comprise at a radially external end 82 thereof a fluid inlet 24 for receiving the fluid from the valve positioner 2.

The stem extension 30, as illustrated in Fig.4, extends from the first central passage 27 beyond the actuator-side opening 74 into the valve actuator 2.

The stem extension 30 comprises a second channel 32 that comprises a top portion 34 for receiving partially a positioner stem 62. As can be seen in Fig.4, the positioner stem 62 extends from the first central passage 27 beyond the positioner-side opening 73 into the valve positioner 3. The first central passage 22 has a diameter *d*₁ that is larger than the diameter of the positioner stem 62 and the external diameter *d*₄ of the stem extension 30 at the top portion 34.

The second channel 32 receives partially, at an end portion 35 opposite to the top portion 34, the valve stem 13. Said end portion 35 extends axially between a shoulder 63 on an internal surface of the stem extension defining a second channel 32 and a face 31 of the stem extension 30 in contact with the piston 14. The face 31 in contact with the piston 14 is defined by a flange 72.

The second channel 32 comprises a second central passage 37 oriented along the longitudinal axis X of the valve system and second inlet passages 38 perpendicular to the second central passage 37. The second inlet passages 38, for example in number of two, open into the second central passage 37 by their ends that are radially internal. The radially external ends of the second inlet passages 38 open into the first central passage 27.

In embodiment of Fig.6, the second channel 32 has a cross-section, observed perpendicularly to the longitudinal axis X, that is enlarged at said end portion 35. The second channel 32 comprises, at said end portion 35, eccentric longitudinal portions 65, for example in number of four equidistantly arranged around the longitudinal axis X of the valve system, for creating air passages between the stem extension 13 and the valve stem 30.

In a variant not illustrated, the valve stem 13 has a longitudinal cut-out, so that the valve stem has a cross-section, where it is received in the second channel 32, that is smaller than the cross-section of the second channel 32 at the end portion 35, in order to allow the fluid to pass between the valve stem 13 and the stem extension 30.

Total cross-section of the longitudinal eccentric portions 65 or of the cut-out on the valve stem are preferably more than 5mm².

The stem extension 30 comprises at said end portion 35 adjacent the surface 31 two successive shoulders 67, 68 forming a stepped surface. The first shoulder 67 is situated further from the piston 14 than the second shoulder 68. The second channel 32 has a diameter *d*₂ smaller at the first shoulder 67 than at the second shoulder 68.

The second shoulder 68 is pressed against a sealing element 59, for example an O-ring for sealing of the interface between the piston 14 and the stem extension 30.

As can be seen in Fig.4, sealing elements 59 are also provided between the coupling element 30 and the positioner stem 62 close to the positioner-side opening 73, and between the coupling element 20 and the stem extension 30 close to the actuator-side opening 74, as well as between the coupling element 30 and the valve positioner 2 and valve actuator. The sealing elements 59 are for example O-rings.

The valve actuator 2 houses a piston 14 which defines a first chamber 6 and a second chamber 7, being respectively a lower chamber 6 and an upper chamber 7 of the valve actuator 2 in the illustrated embodiment. The valve actuator 2 may comprise at least a spring 16 with a force sufficient to hold the piston 14. The spring 16 exerts force acting downward on the piston 14 and must be strong enough to maintain the valve closed with maximum allowed pressure under the plunger 40. In the embodiment illustrated in Fig.3, the upper chamber 7 houses two springs 16 for holding the piston 14 in a normally closed position of the valve 4. The lower chamber 6 is fluidly connected to the valve positioner 3 for adjusting the position of the valve stem 13, as will be explained further below in detail. The valve actuator 2 comprises two port holes 44 situated respectively in the upper 7 and lower 6 chamber. The actuator port holes 44 in the upper 7 and lower 6 chamber are configured to be connected to port or ports of a positioner if external tubing means are to be used.

The piston 14 comprises a central bore 43. The valve stem 13 extends through the central bore 43 into the upper chamber 7 of the valve actuator 2. The valve 13 stem may be fixed on the piston 14 by screwing or elastic ring. The central bore 43 comprises, as shown in Fig.7, a central portion 48 and two eccentric portions 45 adjacent the central portion 48 that form two longitudinal paths 74 between the piston 14 and the valve stem 13.

The piston 14 comprises a recess 55 facing the lower chamber 6 and the valve stem 13 comprises a shoulder 17 facing the recess 55.

As shown in Fig.4, the recess 55 receives at least partially a notched washer 50 arranged between the piston 14 and shoulder 17 of the valve stem 13 for holding the piston 14.

The washer 50 comprises a central opening 52 through which the valve stem 13 passes.

As illustrated in Fig.8, the washer 50 comprises four radial notches 51 that allow fluid flowing in the paths 74 to enter the lower chamber 6.

Total cross-section of the eccentric portions 45 measured perpendicular to the longitudinal axis of the valve system may be around 5mm² and total cross-section of the notches 51 measured perpendicular to the flow of fluid may also be around 5 mm².

The positioner 3 controls the movement of the piston 14 to a desired position to operate the valve 4 and may comprise, as illustrated in Fig.3, a position sensor 78 located in the positioner 3. The positioner sensor 78 generates an electrical signal representative of the position of the valve stem 13. The positioner 3 operates with closed-loop feedback control to determine the required pressure in the lower chamber 6 to bring the valve stem 13 in the position that corresponds to the set degree of opening of the valve 4. The positioner 3 may be microprocessor based, comprising for example an electronical board 79, and may incorporate a miniature control valve 86 for controlling the pressure within the lower chamber 6.

The positioner may comprise a channel 77 configured for receiving a blocking element 88 in order to block the axial movement between the positioner 3 and the coupling element 20. The blocking element 88 may be received at least partially in the first inlet passage 28 in order to block the axial movement between the positioner 3 and the coupling element 20.

In operation, actuating fluid from a fluid port (not shown), which may be a gas, for example compressed air, or a liquid, passes through the miniature valve 86 before entering the first channel 22 via the air inlet 24. The fluid then enters the second channel 32 via the second inlet channels 38 and travels downwards towards the piston 14 along the second central passage 37.

The fluid then travels through the piston 14 by passing between the air paths 74 the valve stem 13 and the stem extension 23, and further through the notches 51 of the washer 50, into the lower chamber 6. The resulting pressure in the lower chamber 6 forces the piston upwards.

In a variant not illustrated, instead of providing eccentric portions 45 on the piston 14 and notches 51 on the washer 50, the valve stem 13 may comprise a cut-out defining a flat section on an external surface of the valve stem 13 facing the piston and the washer to allow passage of the fluid to the lower chamber 6.

A cross-section of the cut-out measured perpendicular to the longitudinal axis of the valve system is preferably more than 5mm² of actuator port holes.

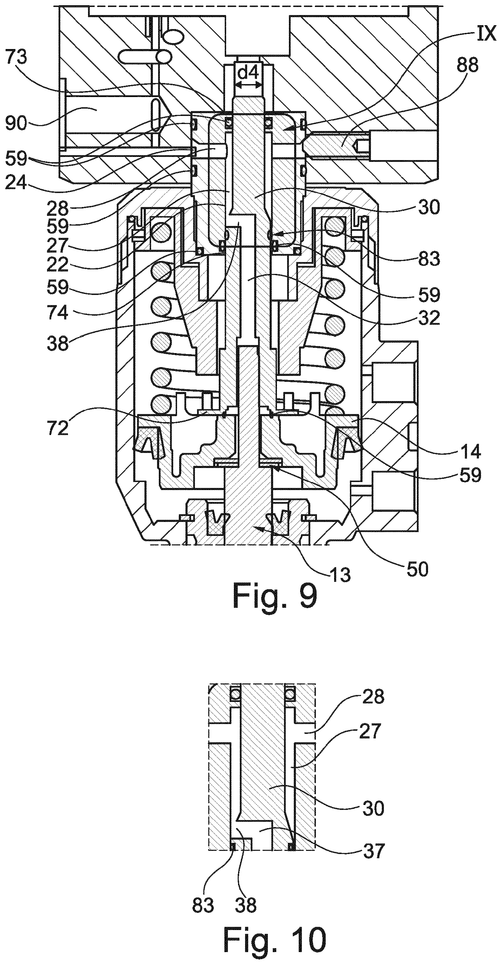

In the embodiment illustrated in Fig.9, the stem extension 30 extends through the first central passage 27 of the coupling element 20, beyond both the positioner-side opening 73 and the actuator-side opening 74. The stem extension 30 has a diameter *d*₄ that is smaller at the positioner-side opening 73 than at the actuator-side opening 74.

In this embodiment, the actuating fluid passes through a path 90 for inlet pressure to the positioner solenoid valve (not shown), before entering a first inlet passage 28 of the first channel 22 via the fluid inlet 24.

The second channel 32, as illustrated in Fig.9, comprises a single second inlet passage 38 that opens into the first central passage 27 of the coupling element 20.

The valve system comprises a bearing 83 or a rider ring 83 arranged on the stem extension 20 for guiding the movement of the stem extension 30 within the coupling element 30.

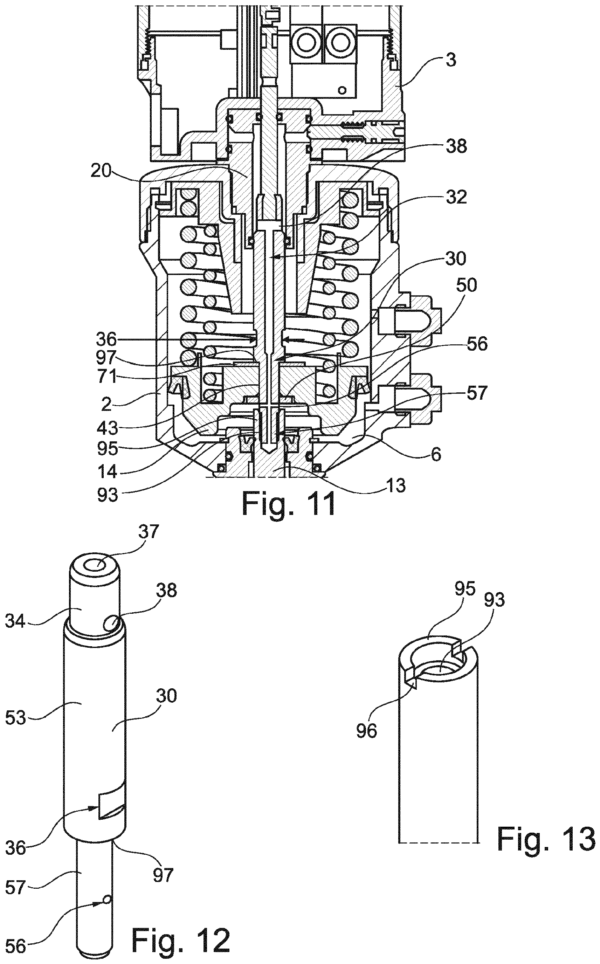

The embodiment of Fig.11 differs from the embodiment of Fig.3 in that the stem extension 30 comprises a lower end portion 57 that passes through the central bore 43 of the piston 14 and extends into the lower chamber 6 of the valve actuator 2.

As illustrated in Figs.11 and 12, the lower end portion 57 comprises radial air outlets 56, for example in number of two, that open into the lower chamber 6.

As illustrated in Fig. 13, the valve stem 13 comprises a collar 95 defining an axial recess 93 for receiving at least partially the lower end portion 57 of the stem extension 30. The collar 95 comprises two notches 96, for example facing the air outlets 56 in a radial direction.

A middle portion 53 of the stem extension 30 extending axially between the top portion 34 and the lower end portion 57 comprises, on an external face thereof, two opposite recesses 36. The stem extension 30 is screwed in the valve stem 13, and these recesses 36 allow to screw efficiently, for example using a wrench.

The stem extension 30 has at the lower portion 57 a smaller cross-section than at the middle portion 53, forming a shoulder 97 between the middle 53 and lower 57 portions. A washer 71 is arranged between the shoulder 97 and the piston 14.

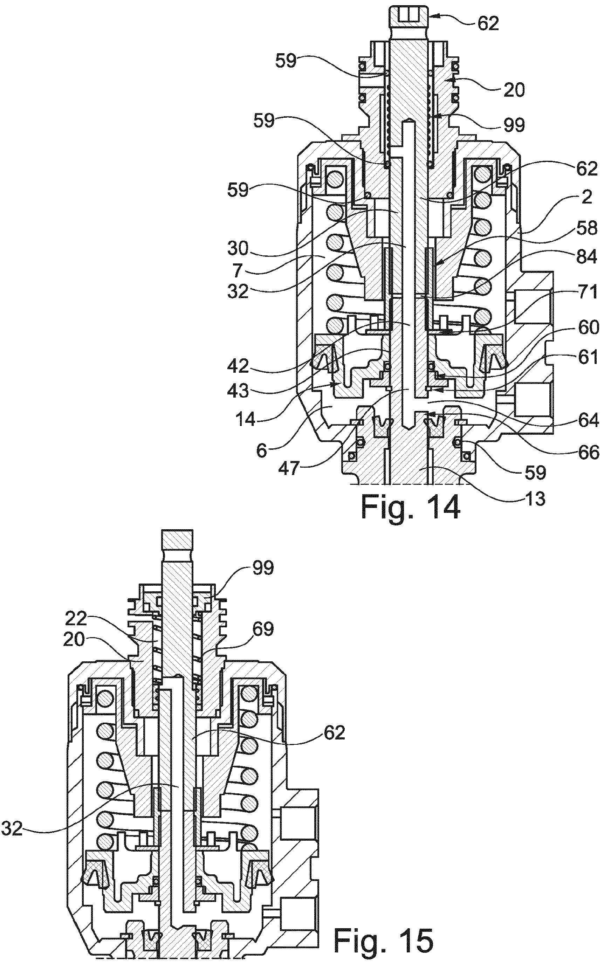

In the embodiments of Figs.14 and 15, the positioner stem 62 is extended by the stem extension 30 which forms a single piece with the positioner stem 62. The coupling element 22 comprises a bearing 99 for guiding the positioner stem 62.

The valve stem 13 extends through the central bore 43 of the piston 14 into the upper chamber 7 of the valve actuator 2 and is coupled to the stem extension 30 by a coupling nut 58. The valve stem 13 and the stem extension 30 may have substantially a same external diameter at an interface 84 therebetween. A washer 71 is arranged between the coupling nut 58 and the piston 14.

The valve stem 13 comprises a third channel 42 aligned with the second channel 32 of the stem extension 30. The third channel 42 comprises an axially oriented third central passage 47 and a radially oriented outlet passage 66. The outlet passage 66 opens into the lower chamber 6 of the valve actuator 2 at an outlet 64.

The valve system comprises a spacer 60 for holding the piston 14.

The valve system further comprises a retainer ring 61, for example a circlip, for holding the spacer 60.

In the embodiment of Fig.14, the bearing 99 is threaded. The first channel 22 is defined by threads of the bearing 99.

In the embodiment of Fig 15, the first channel 22 houses a spring 69 for holding the bearing 99.

The system comprises sealing elements 59, for example O-rings as shown, arranged between different components of the system. This spring 69 is configured to maintain the bearing 99 and press the sealing elements 59.

The invention is not limited to the above described embodiments.

For example, the number of inlet passages 28, 38 may be different from described above.

## Claims

1. A valve system comprising:
- a valve (4) including a valve stem (13);
- a valve actuator (2) for controlling opening and closing of the valve (4) and comprising a piston (14) coupled to the valve stem (13) and defining a first chamber (6) of the valve actuator (2),
- a valve positioner (3) for controlling the valve actuator (2) and adjusting the position of the valve stem (13), and
- a coupling system (10) comprising:
- a coupling element (20) for connecting the valve positioner (3) to the valve actuator (2), the coupling element (20) comprising a first channel (22) in fluid communication with a fluid outlet of the valve positioner (3);
- a stem extension (30) that moves with the valve stem (13) and comprises a second channel (32) in fluid communication with the first channel (22) and the first chamber (6) of the valve actuator
**characterized by** (2),
the stem extension (30) extending through the coupling element (20) into the valve positioner (3), or the positioner (3) comprising a positioner stem (62) received at least partially in the stem extension (30) or extended by the stem extension (30).

2. The valve system (1) according to claim 1, the valve stem (13) extending through the piston, preferably into a second chamber (7) of the valve actuator (2) situated on a side of the piston (14) opposite the first chamber (6).

3. The valve system according to claim 1 or 2, the stem extension (30) being at least partially received in the first channel (22) of the coupling element (20) at a first end and being configured to receive at least partially the valve stem (13) in the second channel (32) at a second end opposite the first.

4. The valve system of claim 3, the second channel (32) having a cross section, observed perpendicular to a longitudinal axis of the valve system, that is enlarged at an end portion adjacent the second end.

5. The valve system of any one of claims 1 to 4, the piston (14) comprising a central bore (43) having a central circular portion (48) and at least one eccentric portion (45) adjacent to the central portion (48), the eccentric portion(s) (45) forming longitudinal path(s) between the valve stem (13) and the piston (14), the second channel (32) being in fluid communication with the first chamber (6) through the eccentric portion(s) (45).

6. The valve system according to any one of claims 1 to 5, comprising a washer (50) arranged between the piston (14) and a shoulder (17) of the valve stem (13), the washer (50) comprising radially oriented notches (51).

7. The valve system according to claim 1, the stem extension (30) extending through the piston (14) into the first chamber (6).

8. The valve system according to claim 7, the second channel (32) comprising at least a fluid outlet (56) that opens into the first chamber (6) of the valve actuator (2).

9. The valve system according to claim 7 or 8, the stem extension (30) being at least partially received in the first channel (22) of the coupling element (20) at a first end and being configured to be received at least partially in the valve stem (13) at a second end.

10. The valve system according to claim 9, the second channel (32) having a cross section, observed perpendicularly to a longitudinal axis of the valve system (10), that is reduced when approaching the second end.

11. The valve system according to claim 1 or 2, the positioner (3) comprising a positioner stem (62) extended by the stem extension (30) and forming a single piece with the stem extension (30).

12. The valve system according to claim 11, the valve stem (13) comprising a third channel (42) in fluid communication with the second channel (32), the third channel (42) comprising an outlet (64) that opens into the first chamber (6) of the valve actuator (2).

13. A method for assembling the valve positioner to the valve actuator using the coupling system to obtain the valve system according to any one of claims 1 to 12, the method comprising the assembling of the coupling element (20) to the valve actuator (2) and the coupling of the stem extension (30) to the valve stem (13).

## Patentansprüche

1. Ventilsystem umfassend:
- ein Ventil (4), das einen Ventilschaft (13) aufweist;
- einen Ventilaktor (2) zum Steuern von Öffnen und Schließen des Ventils (4), umfassend einen Kolben (14), der an den Ventilschaft (13) gekoppelt ist und eine erste Kammer (6) des Ventilaktors (2) definiert,
- eine Ventil-Positioniervorrichtung (3) zum Steuern des Ventilaktors (2) und Einstellen der Position des Ventilschafts (13) und
- ein Kopplungssystem (10) umfassend:
- ein Kopplungselement (20) zum Verbinden der Ventil-Positioniervorrichtung (3) mit dem Ventilaktor (2), wobei das Kopplungselement (20) einen ersten Kanal (22) in Fluidverbindung mit einem Fluidauslass der Ventil-Positioniervorrichtung (3) umfasst;
- eine Schaftverlängerung (30), die sich mit dem Ventilschaft (13) bewegt und einen zweiten Kanal (32) in Fluidverbindung mit dem ersten Kanal (22) und der ersten Kammer (6) des Ventilaktors (2) umfasst, **dadurch gekennzeichnet, dass** die Schaftverlängerung (30) durch das Kopplungselement (20) in die Ventil-Positioniervorrichtung (3) verläuft, oder die Positioniervorrichtung (3) einen Positioniervorrichtungsschaft (62) umfasst, der wenigstens teilweise in der Schaftverlängerung (30) aufgenommen ist oder von der Schaftverlängerung (30) verlängert wird.

2. Ventilsystem (1) gemäß Anspruch 1, wobei der Ventilschaft (13) durch den Kolben verläuft, vorzugsweise in eine zweite Kammer (7) des Ventilaktors (2), die an einer Seite des Kolbens (14) gegenüber der ersten Kammer (6) angeordnet ist.

3. Ventilsystem gemäß Anspruch 1 oder 2, wobei die Schaftverlängerung (30) wenigstens teilweise in dem ersten Kanal (22) des Kopplungselements (20) an einem ersten Ende aufgenommen ist und dafür gestaltet ist, den Ventilschaft (13) wenigstens teilweise in dem zweiten Kanal (32) an ein einem zweiten Ende, das dem ersten gegenüberliegt, aufzunehmen.

4. Ventilsystem gemäß Anspruch 3, wobei der zweite Kanal (32) einen Querschnitt aufweist, der, beobachtet senkrecht zu einer Längsachse des Ventilsystems, an einem Endabschnitt benachbart zu dem zweiten Ende erweitert ist.

5. Ventilsystem gemäß einem der Ansprüche 1 bis 4, wobei der Kolben (14) eine zentrale Bohrung (43) umfasst, die einen zentralen kreisförmigen Teil (48) und wenigstens einen exzentrischen Teil (45) benachbart zu dem zentralen Teil (48) aufweist, wobei der/die exzentrische(n) Teil(e) (45) längslaufende Weg(e) zwischen dem Ventilschaft (13) und dem Kolben (14) bilden, wobei sich der zweite Kanal (32) durch den/die exzentrische(n) Teil(e) (45) in Fluidverbindung mit der ersten Kammer (6) befindet.

6. Ventilsystem gemäß einem der Ansprüche 1 bis 5, umfassend eine Scheibe (50), die zwischen dem Kolben (14) und einer Schulter (17) des Ventilschafts (13) angeordnet ist, wobei die Scheibe (50) radial ausgerichtete Nuten (51) umfasst.

7. Ventilsystem gemäß Anspruch 1, wobei die Schaftverlängerung (30) durch den Kolben (14) in die erste Kammer (6) verläuft.

8. Ventilsystem gemäß Anspruch 7, wobei der zweite Kanal (32) wenigstens einen Fluidauslass (56) umfasst, der sich in die erste Kammer (6) des Ventilaktors (2) öffnet.

9. Ventilsystem gemäß Anspruch 7 oder 8, wobei die Schaftverlängerung (30) an einem ersten Ende wenigstens teilweise in dem ersten Kanal (22) des Kopplungselements (20) aufgenommen ist und dafür gestaltet ist, an einem zweiten Ende wenigstens teilweise in dem Ventilschaft (13) aufgenommen zu werden.

10. Ventilsystem gemäß Anspruch 9, wobei der zweite Kanal (32) einen Querschnitt aufweist, der, beobachtet senkrecht zu einer Längsachse des Ventilsystems (10), bei Annäherung an das zweite Ende verringert ist.

11. Ventilsystem gemäß Anspruch 1 oder 2, wobei die Positioniervorrichtung (3) einen Positioniervorrichtungsschaft (62) umfasst, der von der Schaftverlängerung (30) verlängert wird und ein einziges Stück mit der Schaftverlängerung (30) bildet.

12. Ventilsystem gemäß Anspruch 11, wobei der Ventilschaft (13) einen dritten Kanal (42) in Fluidverbindung mit dem zweiten Kanal (32) umfasst, wobei der dritte Kanal (42) einen Auslass (64) umfasst, der sich in die erste Kammer (6) des Ventilaktors (2) öffnet.

13. Verfahren zum Montieren der Ventil-Positioniervorrichtung an den Ventilaktor unter Verwendung des Kopplungssystems, um das Ventilsystem gemäß einem der Ansprüche 1 bis 12 zu erhalten, wobei das Verfahren Montieren des Kopplungselements (20) an den Ventilaktor (2) und Koppeln der Schaftverlängerung (30) an den Ventilschaft (13) umfasst.

## Revendications

1. Système de soupape comprenant :
- une soupape (4) comprenant une tige de soupape (13) ;
- un actionneur de soupape (2) pour commander l'ouverture et la fermeture de la soupape (4) et comprenant un piston (14) couplé à la tige de soupape (13) et définissant une première chambre (6) de l'actionneur de soupape (2),
- un positionneur de soupape (3) pour contrôler l'actionneur de soupape (2) et ajuster la position de la tige de soupape (13), et
- un système d'accouplement (10) comprenant :
- un élément d'accouplement (20) pour connecter le positionneur de soupape (3) à l'actionneur de soupape (2), l'élément d'accouplement (20) comprenant un premier canal (22) en communication fluidique avec une sortie fluidique du positionneur de soupape (3) ;
- une extension de tige (30) qui se déplace avec la tige de soupape (13) et comprend un deuxième canal (32) en communication fluidique avec le premier canal (22) et la première chambre (6) de l'actionneur de soupape (2), **caractérisée par** l'extension de tige (30) s'étendant à travers l'élément d'accouplement (20) dans le positionneur de soupape (3), ou le positionneur (3) comprenant une tige de positionneur (62) reçue au moins partiellement dans l'extension de tige (30) ou prolongée par l'extension de tige (30).

2. Système de soupape (1) selon la revendication 1, la tige de soupape (13) s'étendant à travers le piston, de préférence dans une seconde chambre (7) de l'actionneur de soupape (2) située sur un côté du piston (14) opposé à la première chambre (6).

3. Système de soupape selon la revendication 1 ou 2, l'extension de tige (30) étant au moins partiellement reçue dans le premier canal (22) de l'élément d'accouplement (20) à une première extrémité et étant configurée pour recevoir au moins partiellement la tige de soupape (13) dans le deuxième canal (32) à une seconde extrémité opposée à la première.

4. Système de soupape selon la revendication 3, le deuxième canal (32) ayant une section transversale, observée perpendiculairement à un axe longitudinal du système de soupape, qui est élargie à une partie d'extrémité adjacente à la seconde extrémité.

5. Système de soupape selon l'une quelconque des revendications 1 à 4, le piston (14) comprenant un alésage central (43) ayant une partie centrale circulaire (48) et au moins une partie excentrique (45) adjacente à la partie centrale (48), la ou les parties excentriques (45) formant un ou des chemins longitudinaux entre la tige de soupape (13) et le piston (14), le deuxième canal (32) étant en communication fluidique avec la première chambre (6) à travers la ou les parties excentriques (45).

6. Système de soupape selon l'une quelconque des revendications 1 à 5, comprenant une rondelle (50) disposée entre le piston (14) et un épaulement (17) de la tige de soupape (13), la rondelle (50) comprenant des encoches (51) orientées radialement.

7. Système de soupape selon la revendication 1, l'extension de tige (30) s'étendant à travers le piston (14) dans la première chambre (6).

8. Système de soupape selon la revendication 7, le deuxième canal (32) comprenant au moins une sortie de fluide (56) qui débouche dans la première chambre (6) de l'actionneur de soupape (2).

9. Système de soupape selon la revendication 7 ou 8, l'extension de tige (30) étant au moins partiellement reçue dans le premier canal (22) de l'élément d'accouplement (20) à une première extrémité et étant configurée pour être reçue au moins partiellement dans la tige de soupape (13) à une seconde extrémité.

10. Système de soupape selon la revendication 9, le deuxième canal (32) ayant une section transversale, observée perpendiculairement à un axe longitudinal du système de soupape (10), qui est réduite à l'approche de la seconde extrémité.

11. Système de soupape selon la revendication 1 ou 2, le positionneur (3) comprenant une tige de positionneur (62) prolongée par l'extension de tige (30) et formant une seule pièce avec l'extension de tige (30).

12. Système de soupape selon la revendication 11, la tige de soupape (13) comprenant un troisième canal (42) en communication fluidique avec le deuxième canal (32), le troisième canal (42) comprenant une sortie (64) qui débouche dans la première chambre (6) de l'actionneur de soupape (2).

13. Procédé d'assemblage du positionneur de soupape à l'actionneur de soupape à l'aide du système d'accouplement pour obtenir le système de soupape selon l'une quelconque des revendications 1 à 12, le procédé comprenant l'assemblage de l'élément d'accouplement (20) à l'actionneur de soupape (2) et l'accouplement de l'extension de tige (30) à la tige de soupape (13).
